# EUROPEAN PATENT SPECIFICATION

(11) **EP 1 370 149 B1**
(45) Date of publication and mention of the grant of the patent: **05.03.2014**
(21) Application number: 02714080.5
(22) Date of filing: 25.03.2002
(51) Int. Cl.: A23G 4/08, A23G 4/00, A23G 4/06

(54) **DEGRADABLE RESIN SUBSTITUTE FOR CHEWING GUM**
ABBAUBARE HARZZUSAMMENSETZUNGERSATZ FÜR KAUGUMMI
RESINE BIODEGRADABLE POUR GOMME A MACHER

(30) Priority: 23.03.2001 DK 200100493; 06.07.2001 US 303095 P
(43) Date of publication of application: 17.12.2003
(73) Proprietor: Gumlink A/S, 7100 Vejle (DK)
(72) Inventor: WITTORFF, Helle, DK-7120 Vejle (DK); ANDERSEN, Lone, DK-5500 Middelfart (DK); ISAKSEN, Anette, DK-6000 Kolding (DK); STOREY, Robson, Hattiesburg, MS 39402 (US)
(74) Representative: Olesen, Kaj
(86) International application number: PCT/DK2002/000201
(87) International publication number: WO 2002/076228

(56) References cited:
- EP-A- 0 258 780
- EP-A- 0 427 185
- WO-A-00/19837
- WO-A-01/47368
- WO-A-94/11441
- US-A- 4 057 537
- US-A- 4 882 168
- US-A- 5 610 266
- US-A- 5 672 367

## Description

### FIELD OF THE INVENTION

The present invention pertains to the field of chewing gum. In particular, there is provided a novel degradable resin replacement compound, which is generally applicable for chewing gum formulations. The present invention provides a gum base and a chewing gum comprising a polyester co-polymer obtainable by the polymerisation of cyclic esters and wherein the co-polymer has a glass transition temperature (Tg) in the range from 20 to 38°C.

### TECHNICAL BACKGROUND AND PRIOR ART

It is generally recognised that chewing gum that is dropped in indoor or outdoor environments gives rise to considerable nuisances and inconveniences due to fact that the dropped gum sticks firmly to e.g. street and pavement surfaces and to shoes and clothes of people being present or moving in the environments. Adding substantially to such nuisances and inconveniences is the fact that currently available chewing gum products are based on the use of elastomeric and resinous polymers of natural or synthetic origin that are substantially non-degradable in the environment.

City authorities and others being responsible for cleanliness of indoor and outdoor environments therefore have to exercise considerable efforts to remove dropped chewing gum, such efforts, however, being both costly and without satisfactory results.

There have been attempts to reduce the nuisances associated with the widespread use of chewing gum e.g. by improving cleaning methods to make them more effective with regard to removal of dropped chewing gum remnants or by incorporating antisticking agents into chewing gum formulations. However, none of these precautions have contributed significantly to solving the pollution problem.

The past two decades have seen an increasing amount of interest paid to synthetic polyesters for a variety of applications ranging from biomedical devices to gum bases. Many of these polymers are readily hydrolysed to their monomeric hydroxy-acids, which are easily removed by metabolic pathways. Biodegradable polymers are e.g. anticipated as alternatives to traditional non- or low-degradable plastics such as poly(styrene), poly(isobutylene), and poly(methyl-methacrylate).

Thus, it has recently been disclosed, e.g. in US 5,672,367 that chewing gum may be made from certain synthetic polymers having in their polymer chains chemically unstable bonds that can be broken under the influence of light or hydrolytically into water-soluble and non-toxic components. The claimed chewing gum comprises at least one degradable polyester polymer obtained by the polymerisation of cyclic esters, e.g. based on lactides, glycolides, trimethylene carbonate and ε-caprolactone. It is mentioned in this patent that chewing gum made from such polymers that are referred to as biodegradable are degradable in the environment.

US 6,153,231 discloses degradable chewing gum bases which comprises poly(lactic acid) co-polymers selected from poly(lactid acid-dimer-fatty acid-oxazoline) copolymers and poly(lactic acid-diol-urethane) copolymers.

In general, a chewing gum composition typically comprises a water-soluble bulk portion, a water-insoluble gum base portion and typically water-insoluble flavouring agents.

The water-insoluble gum base generally comprises elastomers, resin compounds, fats and oils, waxes, emulsifiers, softeners and inorganic fillers. The resin compounds are contributing to obtain the desired masticatory properties and acting as plasticizers for the elastomers of the gum base composition.

Resin in conventional chewing gum bases typically include synthetic resins such as poly(vinyl acetate) (PVAc) and natural resins such as rosin esters which are often referred to as ester gums. Additionally, natural resins such as glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins are typically applied in chewing gum bases. Other resinous compounds typically applied in chewing gum bases include synthetic resins such as terpene resins derived from alpha-pinene, beta-pinene, and/or d-limonene and natural terpene resins.

The synthetic resin polyvinyl acetate (PVAc) is substantially non-degradable in the environment and thus the use of this resin polymer in gum bases has a high influence on the non-degradability of chewing gum. PVAc is usually added to a gum base in amounts dependent upon the molecular weight range, and thereby i.a. provides stretch or elasticity to the gum base. The total amount of PVAc used in a gum base composition is usually from about 5% to 95% by weight based on the total gum base composition. Typically, the amount of PVAc in chewing gum bases is in the range of 10-30%, and thus constitute a major part of the entire gum base composition. As this synthetic resin is substantially non-degradable in the environment, this component in the gum base contributes significantly to the overall non-degradability of chewing gum based on such gum bases.

It has now been found that it is possible, in a gum base composition, to replace polyvinyl acetate (PVAc) gum resin completely with a degradable polyester copolymer obtainable by the polymerisation of cyclic esters and wherein the copolymer has a glass transition temperature (Tg) in the range from 20 to 38°C without loosing the rheological properties of the gum base. Thus, it has been found by the present inventors that by replacing PVAc with a degradable co-polymer consisting of D,L-lactide and ε-caprolactone, it is possible to prepare gum bases and chewing gum based on these resins, which have the same or similar rheological properties (such as plasticity (loss modulus) and elasticity (storage modulus)) as conventional gum bases prepared with PVAc..

US5,672,367 describes generically polyester polymers obtainable by the polymerisation of cyclic esters. Explicitly is discloses a co-polymer consisting of D,L-lactide and ε-caprolactone with a glass transition temperature (Tg) of 15°C (Example 1) and a co-polymer consisting of D,L-lactide and ε-caprolactone with a glass transition temperature (Tg) of -10°C (Example 2).

Additionally, it has been found by the present inventors that it is possible to replace natural resin components such as natural rosin esters with a degradable co-polymer consisting of D,L-lactide and ε-caprolactone. It is well known that natural resins are substantially non-degradable in the environment. As they typically constitutes between 10 to 50% of the entire gum base composition, the replacement of this component of the gum base with a degradable component highly improve the general degradability of the gum base.

### SUMMARY OF THE INVENTION

Accordingly, the present invention pertains in a first aspect to a gum base comprising a polyester co-polymer obtainable by the polymerisation of cyclic esters and wherein the co-polymer has a glass transition temperature (Tg) in the range from 20 to 38°C.

In a further aspect there is provided a chewing gum comprising a polyester copolymer obtainable by the polymerisation of cyclic esters and wherein the copolymer has a glass transition temperature (Tg) in the range from 20 to 38°C.

According to a further embodiment of the invention, a chewing gum or a gum base may comprise a partly substituted functional group, here a resin and where the substituted functional group is bio-degradable.

According to a further embodiment of the invention, it has been determined that conventional non-biodegradable functional groups as such may be substituted by other rheologically matching bio-degradable polymers.

### DETAILED DISCLOSURE

Without being limited to theory, it is believed that a suitable strategy for creation of a resin substitute is to correctly match the glass transition (Tg) of the resin to be replaced.

A preferred resin to replace is low molecular weight PVA, which has a glass transition (Tg) of about 33°C.

Accordingly, it is preferred that the polyester co-polymer has a glass transition temperature (Tg) in the range from 25 to 37°C, more preferred that the polyester copolymer has a glass transition temperature (Tg) in the range from 28 to 35°C, even more preferred that the polyester co-polymer has a glass transition temperature (Tg) in the range from 30 to 35°C, and most preferred that the polyester co-polymer has a glass transition temperature (Tg) in the range from 31 to 34°C

It is preferred to create a copolymer consisting of a high Tg monomer and a low Tg monomer. An intermediate Tg may then be attained based upon the exact mole ratios of the two monomers. In principle one may theoretically use any combination of one or more high Tg monomers and one or more low Tg monomers.

Preferably is used a high Tg monomer selected form the group of monomers consisting of D,L-lactide, L-lactide and glycolide; and a low Tg monomer selected from the group consisting of ε-caprolactone, δ-valerolactone, trimethylene carbonate (TMC) and dioxanone.

Preferred combinations are:
D,L-lactide/ε-caprolactone
   D,L-lactide/TMC
   D,L-lactide/δ-valerolactone
   D,L-lactide/dioxanone
   D,L-lactide in combination with any two low Tg monomers
   D,L-lactide in combination with any three low Tg Monomers
   D,L-lactide in combination with all four low Tg Monomers
L-lactide/ε-caprolactone
   L-lactide/TMC
   L-lactide/δ-valerolactone
   L-lactide/dioxanone
   L-lactide in combination with any two low Tg monomers
   L-lactide in combination with any three low Tg Monomers
   L-lactide in combination with all four low Tg Monomers
D,L-lactide/glycolide/ε-caprolactone
   D,L-lactide/glycolide/TMC
   D,L-lactide/glycolide/δ-valerolactone
   D,L-lactide/glycolide/dioxanone
   D,L-lactide/glycolide in combination with any two low Tg monomers
   D,L-lactide/glycolide in combination with any three low Tg Monomers
   D,L-lactide/glycolide in combination with all four low Tg Monomers
L-lactide/glycolide/ε-caprolactone
   L-lactide/glycolide/TMC
   L-lactide/glycolide/δ-valerolactone
   L-lactide/glycolide/dioxanone
   L-lactide/glycolide in combination with any two low Tg monomers
   L-lactide/glycolide in combination with any three low Tg Monomers
   L-lactide/glycolide in combination with all four low Tg Monomers
glycolide/ε-caprolactone
   glycolide/TMC
   glycolide/δ-valerolactone
   glycolide/dioxanone
   glycolide in combination with any two low Tg monomers
   glycolide in combination with any three low Tg Monomers
   glycolide in combination with all four low Tg Monomers
D,L-lactide/L-lactide/ε-caprolactone
   D,L-lactide/L-lactide/TMC
   D,L-lactide/L-lactide/δ-valerolactone
   D,L-lactide/L-lactide/dioxanone
   D,L-lactide/L-lactide in combination with any two low Tg monomers
   D,L-lactide/L-lactide in combination with any three low Tg Monomers
   D,L-lactide/L-lactide in combination with all four low Tg Monomers
D,L-lactide/L-lactide/glycolide/ε-caprolactone
   D,L-lactide/L-lactide/glycolide/TMC
   D,L-lactide/L-lactide/glycolide/δ-valerolactone
   D,L-lactide/L-lactide/glycolide/dioxanone
   D,L-lactide/L-lactide/glycolide in combination with any two low Tg monomers
   D,L-lactide/L-lactide/glycolide in combination with any three low Tg Monomers
   D,L-lactide/L-lactide/glycolide in combination with all four low Tg Monomers

Below is described a preferred embodiment relating to a gum base comprising a degradable co-polymer consisting of D,L-lactide and ε-caprolactone and a chewing gum comprising a co-polymer consisting of D,L-lactide and ε-caprolactone.
The different embodiments of a gum base below are also relevant for a gum base as described above.

It is a major objective of the present invention to provide gum bases for chewing gum which results in chewing gum products that following chewing are more readily degraded in the environment if improperly dropped or discarded here by the user and/or which, relative to chewing gum comprising conventional non-degradable polymers can be removed more readily mechanically and/or by the use of cleaning agents.

Accordingly, the chewing gum base provided herein is a gum base which when applied in chewing gum, renders the chewing gum more capable of undergoing a physical, chemical and/or biological degradation whereby e.g. dumped chewing gum waste becomes more readily removable from the site of dumping or is eventually disintegrated to lumps or particles which are no longer recognisable as being chewing gum remnants. The degradation or disintegration of the gum base provided herein can be effected or induced by physical factors such as temperature, light, moisture, by chemical factors such as hydrolysis caused by a change in pH or by the action of appropriate enzymes capable of degrading the co-polymers according to the invention.

Accordingly, it is one objective of the present invention to provide a gum base comprising a degradable co-polymer consisting of D,L-lactide and ε-caprolactone. As mentioned above, it has been found possible, by applying such a co-polymer, to completely replace the synthetic and substantially non-degradable gum resin polyvinyl acetate, PVAc, which is typically applied in chewing gum compositions. Surprisingly, as will appear from the following examples, this replacement can be made without impairing the rheological properties of the gum base and the chewing gum made from such gum bases. Thus, it is possible to obtain rheological properties (such as plasticity (loss modulus) and elasticity (storage modulus)) which are similar to conventional gum bases prepared with PVAc. Plasticity and elasticity are parameters that are essential for the texture in the final chewing gum.

Furthermore, a degradable co-polymer consisting of D,L-lactide and ε-caprolactone co-polymer may in useful embodiments replace natural resin components in gum bases such as natural rosin esters which are well known to be substantially non-degradable in the environment. As natural resins such as natural rosin esters, are derived from natural sources such as from the oleoresin from pine trees, the composition and the quality of the natural resin may not be constant. This can give raise to certain variation problems when preparing gum bases for chewing gum, as the uniformity of the composition of each batch is of outermost importance. Accordingly, the present invention provides a solution to the above problem with respect to the composition and varying quality of natural resins.

In addition, it has been found by the present inventors that by applying a degradable co-polymer consisting of D,L-lactide and ε-caprolactone as a PVAc and/or natural resin substitute the resulting gum base, and hence the chewing gum prepared from such a gum base, is less sticky than chewing gum prepared from standard gum base not containing the co-polymer consisting of D,L-lactide and ε-caprolactone. Accordingly, it is a further objective of the present invention to provide a chewing gum which is less sticky than a chewing gum prepared from a standard gum base not comprising poly(D,L-lactide-co-ε-caprolactone).

The preparation of a co-polymer consisting of D,L-lactide and ε-caprolactone can be performed by various suitable polymerisation processes which are well known in the art, e.g. by ring opening polymerisation (ROP) in the presence of an appropriate catalyst. Accordingly, in one embodiment stannous octoate (SO) may advantageously be applied as a catalyst and a low molcular weight alcohol (e.g. propylene glycol) as initiator to polymerise a mixture of D,L-lactide (racemic mixture) and ε-caprolactone monomers and in order to obtain poly(D,L-lactide-co-ε-caprolactone).

In a useful embodiment, the poly(D,L-lactide-co-ε-caprolactone) co-polymer is synthesised to have a specific mol:mol ratio between the D,L-lactide and ε-caprolactone monomers. Accordingly, in one useful embodiment of the present invention the co-monomer mol:mol ratio between D,L-lactide and ε-caprolactone in poly(D,L-lactide-co-ε-caprolactone) is in the range of 80:20 to 99:1 (mol:mol), including the range of 92:8 to 94:6 (mol:mol). In one specific embodiment the mol:mol ratio between D,L-lactide and ε-caprolactone in the co-polymer is about 93:7 (mol:mol). The mol:mol ratio of the poly(D,L-lactide-co-ε-caprolactone) copolymer may advantageously be determined by means of e.g. ¹³C NMR-analysis.

In further useful embodiments, the molecular weight of the poly(D,L-lactide-co-ε-caprolactone) co-polymer in the gum base according to the invention is in the range of 1.500 - 9.000 g/mol, including the range of 2.000 - 8.000 g/mol, including the range of 3.000 - 7.000 g/mol, such as the range of 3.500 - 6.000.

As will be illustrated by the following examples, in one aspect of the invention a useful gum base may comprise a poly(D,L-lactide-co-ε-caprolactone) co-polymer having a mol:mol ratio between D,L-lactide and ε-caprolactone of about 91:9, and a molecular weight of about 3.500 g/mol. In another aspect of the present invention, the gum base according to the invention may comprise a poly(D,L-lactide-co-ε-caprolactone) having a mol:mol ratio between D,L-lactide and ε-caprolactone of about 93:7 and a molecular weight of about 5.000 g/mol.

Accordingly, it will be appreciated that the molecular weight and the mol:mol ratio between D,L-lactide and ε-caprolactone of the co-polymer may be individually adjusted, by applying different polymerisation conditions, in order to obtain the desired rheological characteristics of the gum base in which the copolymer is intended to be applied. Thus, it is contemplated that a wide range of different molecular weights of the co-polymer may be useful in accordance with the invention, and that a wide range of different mol:mol ratios between the D,L-lactide and ε-caprolactone monomers may be advantageously applied.

An important rheological feature for gum bases which are applied in chewing gum compositions, is the glass transition temperature (Tg). As used herein, the glass transition temperature means the temperature at which the ratio of the storage modulus G' (elasticity) and the loss modulus G" (plasticity) equals one. Storage modulus G' and loss modulus G" of polymers may in general be determined by applying a rheometer such as AR1000 from TA Instruments.

In a presently preferred embodiment the gum base according to the invention comprises a poly(D,L-lactide-co-ε-caprolactone) co-polymer having a glass transition temperature (Tg) in the range of 20-30°C. In one specific embodiment, it has been found, as will appear from the following examples, that a gum base comprising a poly(D,L-lactide-co-ε-caprolactone) copolymer having a molecular weight of 3.500 g/mol and a Tg in the range of 21-25°C, has rheological properties which are similar to gum bases not comprising the degradable co-polymer. Thus, it was found that by replacing the PVAc in the gum base with such a degradable poly(D,L-lactide-co-ε-caprolactone) co-polymer, it was possible to obtain rheological properties which were similar to a standard gum base not containing the poly(D,L-lactide-co-ε-caprolactone) co-polymer having these specific characteristics.

In a further embodiment, gum bases comprising poly(D,L-lactide-co-ε-caprolactone) co-polymers having a molcular weight of 5.000 g/mol and a Tg in the range of 30-35°C are useful for replacing the PVAc component and the natural resin component in a standard gum base.

As was mentioned a above, the present invention also provides a chewing gum comprising a co-polymer consisting of D,L-lactide and ε-caprolactone. Accordingly, there is provided a chewing product which is based on the gum base according to the invention which is disclosed herein.

As used herein, the expressions "gum base" refers in general to the water insoluble part of the chewing gum which typically constitutes 10 to 99% by weight including the range of 25 -60% by weight of the total chewing gum formulation. Chewing gum base formulations typically comprises one or more elastomeric compounds which may be of synthetic or natural origin, one or more resin compounds which may be of synthetic or natural origin, fillers, softening compounds and minor amounts of miscellaneous ingredients such as antioxidants and colorants, etc.

Thus, it is within the scope of the invention that the gum base part, in addition to the degradable co-polymer consisting of D,L-lactide and ε-caprolactone, contains a proportion of non-degradable polymeric elastomers and/or resins which may be of natural or synthetic origin. The proportion of such non-degradable polymers may be in the range of 1-99% by weight including the range of 5 to 90% by weight such as in the range of 10-50% by weight.

In this context, useful synthetic elastomers include, but are not limited to, synthetic elastomers listed in Food and Drug Administration, CFR, Title 21, Section 172,615, the Masticatory Substances, Synthetic) such as polyisobutylene with a gas pressure chromatography (GPC) average molecular weight in the range of about 10,000 to about 1,000,000 including the range of 50,000 to 80,000, isobutylene-isoprene copolymer (butyl elastomer), styrene-butadiene copolymers e.g. having styrene-butadiene ratios of about 1:3 to about 3:1, polyisoprene, polyethylene, vinyl acetate-vinyl laurate copolymer e.g. having a vinyl laurate content of about 5 to about 50% by weight such as 10 to 45% by weight of the copolymer, and combinations hereof.

It is e.g. common in the industry to combine in a gum base a synthetic elastomer having a high molecular weight and a low-molecular-weight elastomer. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Useful natural non-degradable elastomers include the elastomers listed in Food and Drug Administration, CFR, Title 21, Section 172,615, as "Masticatory Substances of Natural Vegetable Origin" including natural rubber compounds such as smoked or liquid latex and guayule and other natural gums including jelutong, lechi caspi, massaranduba balata, sorva, perillo, rosindinha, massaranduba chocolate, chicle, nispero, gutta hang kang, and combinations thereof. The preferred synthetic elastomer and natural elastomer concentrations vary depending on whether the chewing gum in which the base is used is adhesive or conventional, bubble gum or regular gum, as discussed below. Presently preferred natural elastomers include jelutong, chicle, massaranduba balata and sorva.

However, it is also contemplated that in useful embodiments, the gum base according to the invention which comprise poly(D,L-lactide-co-ε-caprolactone), may advantageously further comprise elastomeric or resinous polymer compounds which are environmentally or biologically degradable.

In the present context the terms environmentally or biologically degradable polymer compounds refers to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognisable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Accordingly, suitable examples of additional environmentally or biologically degradable chewing gum base polymers which can be applied in accordance with the gum base of the present invention include degradable polyesters, polycarbonates, polyester amides, polypeptides, homopolymers of amino acids such as polylysine, and proteins including derivatives hereof such as e.g. protein hydrolysates including a zein hydrolysate. Particularly useful compounds of this type include polyester polymers obtained by the polymerisation of one or more cyclic esters such as lactide, glycolide, trimethylene carbonate, 6-valerolactone, *β*-propiolactone and ε-caprolactone. Such degradable polymers may be homopolymers, copolymers or terpolymers, including graft- and block-polymers.

In accordance with the invention, the chewing gum base components which are useful may include one or more resin compounds contributing to obtain the desired masticatory properties and acting as plasticizers for the elastomers of the gum base composition. In the present context, useful elastomer plasticizers include synthetic resins such as polyvinyl acetate (PVAc) having a GPC average molecular weight in the range of 2,000 to about 90,000 such as the range of 3,000 to 80,000, and natural resins such as natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins. Other useful resinous compounds include synthetic resins such as terpene resins derived from alpha-pinene, beta-pinene, and/or d-limonene, natural terpene resins; and any suitable combinations of the foregoing. The preferred elastomer plasticizers will also vary depending on the specific application, and on the type of elastomer(s) being used.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

The fillers/texturisers may also include natural organic fibres such as fruit vegetable fibres, grain, rice, cellulose and combinations thereof.

A gum base formulation may, in accordance with the present invention comprise one or more softening agents e.g. sucrose polyesters including those disclosed in WO 00/25598, which is incorporated herein by reference, tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof. As used herein the term "softener" designates an ingredient, which softens the gum base or chewing gum formulation and encompasses waxes, fats, oils, emulsifiers, surfactants and solubilisers.

To soften the gum base further and to provide it with water binding properties, which confer to the gum base a pleasant smooth surface and reduce its adhesive properties, one or more emulsifiers is/are usually added to the composition, typically in an amount of 0 to 18% by weight, preferably 0 to 12% weight of the gum base. Mono- and diglycerides of edible fatty acids, lactic acid esters and acetic acid esters of mono- and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes and fats are conventionally used for the adjustment of the consistency and for softening of the chewing gum base when preparing chewing gum bases. In connection with the present invention any conventionally used and suitable type of wax and fat may be used, such as for instance rice bran wax, polyethylene wax, petroleum wax (refined paraffin and microcrystalline wax), paraffin, bees' wax, carnauba wax, candelilla wax, cocoa butter, degreased cocoa powder and any suitable oil or fat, as e.g. completely or partially hydrogenated vegetable oils or completely or partially hydrogenated animal fats.
In an embodiment the gum base is wax-free.

Furthermore, the gum base formulation may, in accordance with the present invention, comprise colourants and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

The composition of chewing gum base formulations which are admixed with chewing gum additives as defined below can vary substantially depending on the particular product to be prepared and on the desired masticatory and other sensory characteristics of the final product. However, typical ranges (weight%) of the above gum base components are: 5 to 50% by weight elastomeric compounds, 5 to 55% by weight elastomer plasticizers, 0 to 50% by weight filler/texturiser, 5 to 35% by weight softener and 0 to 1% by weight of miscellaneous ingredients such as antioxidants, colourants, etc.

A chewing gum centre formulation comprises, in addition to the above water-insoluble gum base components, a generally water soluble part comprising a range of chewing gum additives. In the present context, the term "chewing gum additive" is used to designate any component, which in a conventional chewing gum manufacturing process is added to the gum base. The major proportion of such conventionally used additives are water soluble, but water-insoluble components, such as e.g. water-insoluble flavouring compounds, can also be included.

In the present context, chewing gum additives include bulk sweeteners, high intensity sweeteners, flavouring agents, softeners, emulsifiers, colouring agents, binding agents, acidulants, fillers, antioxidants and other components such as pharmaceutically or biologically active substances, conferring desired properties to the finished chewing gum product.

Suitable bulk sweeteners include both sugar and non-sugar sweetening components. Bulk sweeteners typically constitute from 5 to 95% by weight of the chewing gum, more typically 20 to 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High intensity artificial sweetening agents can also be used alone or in combination with the above sweeteners. Preferred high intensity sweeteners include, but are not limited to sucralose, aspartame, salts of acesulfame, alitame, saccharin and its salts, cyclamic acid and its salts, glycyrrhizin, dihydrochalcones, thaumatin, monellin, sterioside and the like, alone or in combination. In order to provide longer lasting sweetness and flavour perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fibre extrusion may be used to achieve desired release characteristics. Encapsulation of sweetening agents can also be provided using another chewing gum component such as a resinous compound.

Usage level of the artificial sweetener will vary considerably and will depend on factors such as potency of the sweetener, rate of release, desired sweetness of the product, level and type of flavour used and cost considerations. Thus, the active level of artificial sweetener may vary from 0.02 to 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low calorie gum is desired, a low caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low calorie-bulking agent can be used.

Further chewing gum additives which may be included in the chewing gum according to the present invention include surfactants and/or solubilisers, especially when pharmaceutically or biologically active ingredients are present. As examples of types of surfactants to be used as solubilisers in a chewing gum composition according to the invention reference is made to H.P. Fiedler, Lexikon der Hilfstoffe fur Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient the chewing gum may preferably also comprise a carrier known in the art.

The chewing gum centres according to the present invention may contain aroma agents and flavouring agents including natural and synthetic flavourings e.g. in the form of natural vegetable components, essential oils, essences, extracts, powders, including acids and other substances capable of affecting the taste profile. Examples of liquid and powdered flavourings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavour may be a natural flavouring agent which is freeze-dried, preferably in the form of a powder, slices or pieces of combinations thereof. The particle size may be less than 3 mm, such as less than 2 mm, more preferred less than 1 mm, calculated as the longest dimension of the particle. The natural flavouring agent may in a form where the particle size is from 3 µm to 2 mm, such as from 4 µm to 1 mm. Preferred natural flavouring agents include seeds from a fruit e.g. from strawberry, blackberry and raspberry.

Various synthetic flavours, such as mixed fruit flavours may also be used in the present chewing gum centres. As indicated above, the aroma agent may be used in quantities smaller than those conventionally used. The aroma agents and/or flavours may be used in an amount of from 0.01 to 30% by weight of the final product depending on the desired intensity of the aroma and/or flavour used. Preferably, the content of aroma/flavour is in the range of from 0.2 to 3% by weight of the total composition.

In one embodiment the chewing gum centre composition comprises a pharmaceutically or biologically active substance. Examples of such active substances, a comprehensive list of which is found e.g. in WO 00/25598, which is incorporated herein by reference, include drugs, dietary supplements, antiseptic agents, pH adjusting agents, anti-smoking agents and substances for the care or treatment of the oral cavity and the teeth such as hydrogen peroxide and compounds capable of releasing urea during chewing. Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

The gum centre of coated chewing gum element according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere.

The invention will now be described in further details in the following, non-limiting examples and figures wherein
Fig. 1 shows the comparison of synthesised resin substitutes with PVAc by means of viscosity versus shear rate,
Fig. 2 shows frequency sweep with storage modulus and loss modulus for standard gumbase (101), and gum bases prepared with synthesised resin substitutes resin sub. 1 (102) and Resin sub 2. (103).
Fig. 3 shows the chewing gum profile of standard and samples containing synthesised degradable resin substitutes Resin sub. 1 (102) and Resin sub. 2 (103),
Fig. 4 and 5 shows rheological measurements of standard gum base (107) and gum base wherein PVAc and natural resin is replaced by Resin sub. 1 (108) and Resin sub. 2 (109) by means of viscosity versus shear rate (figure 4) and the complex elasticity (G*) and tan (δ) vs. frequency (figure 5).
Fig. 6 shows the chewing gum profile of standard (107) and samples containing Resin sub. 2 in amounts of 20% (108) and 35% (109).
Fig. 7 shows the sensory profile analyses of standard (107) and samples containing Resin sub. 2 in amounts of 20% (108) and 35% (109) (initial phase).
Fig. 8 shows the sensory profile analyses of standard (107) and samples containing Resin sub. 2 in amounts of 20% (108) and 35% (109) (intermediate phase).
Fig. 9 shows the sensory profile analyses of standard (107) and samples containing Resin sub. 2 in amounts of 20% (108) and 35% (109) (end phase).
Fig. 10 shows degradation of resin substitute measured as loss of Mn as function of time.

### EXAMPLE 1

### Molecular weight (Mn) and a glass transition temperature of poly(vinyl acetate)

GPC and DSC measurements were performed in order to evaluate the number average molecular weight (Mn) and a glass transition temperature (Tg) of a poly(vinyl acetate) (PVAc) resin typically used as a gum base ingredient. The average molecular weight (Mn) of the PVAc was 5,130 g/mol and the glass transition temperature (Tg) was 33°C.

### EXAMPLE 2

### Model Compounds

In order to identify the proper copolymer ratio that would create a degradable material with similar thermal characteristics to PVAc, a series of reactions were conducted at two target molecular weights, namely 3,000 g/mol and 5,000 g/mol, varying the monomer feed ratios. The following is a representative example of the method used for the model copolymerizations.

All glassware and stir bars were dried at 200°C overnight prior to use. Model compound polymerizations were carried out neat in 40 ml test tubes equipped with 24/40 joints. The proper amounts of ε-caprolactone (CAP) and D,L-lactide (DLL) monomer and stannous octoate (SO) catalyst (1.4x10⁻⁴ mol SO/mol monomer) were added to the reaction vessel along with a small teflon-coated stir bar.

A summary of the DSC results of the above model compound polymerization is shown in Table 1. The Tg of the resulting material decreases with increasing CAP content in the feed. Table 1 shows the resulting Tg from each copolymer ratio. All Tg data was measured on the second heating scan off the DSC experiment at a heating rate of 10°C/min.

**TABLE 1**

| Sample | Mol % CAP in feed | Tg (°C) |
|---|---|---|
| A | 2 | 29 |
| B | 10 | 23 |
| C | 15 | 19 |
| D | 20 | 11 |
| E | 5 | 38 |
| F | 10 | 30 |
| G | 12 | 26 |
| H | 15 | 22 |
| PVAc | na | 33 |

### EXAMPLE 3

### Large batches for gum base analysis

Two large batches of copolymer were synthesized with target molecular weights of 3,000 g/mol and 5,000 g/mol with monomer feed ratios both of 10% CAP. As before, all glassware and stir bars were dried at 200°C overnight prior to use. Both large-scale reactions were conducted in a 11 reaction kettle fitted with a three neck cap. The proper amounts of CAP and DLL monomer were added to the reaction vessel in the proper ratios as indicated in Table 2.

DSC and GPC analysis of the resulting material indicated the Tg of the copolymers to be 23 and 31°C, while the molecular weight was found to be 3,500 and 5,600 g/mol, respectively.
DECGATE ¹³C NMR analysis of the resulting material indicated a 9,3 and 7.6mol% CAP incorporation in the copolymers.

**TABLE 2**

| | % CAP in Feed | Tg | Mn |
|---|---|---|---|
| 3K | 9,3% | 23 | 3,500 |
| 5K | 7.6% | 31 | 5,600 |

### EXAMPLE 4

### Gum base preparation

In order to test the two batches of copolymer prepared in Example 3, a gum base were prepared. Thus, the synthesised resin substitutes poly(D,L-lactide-co-ε-caprolactone) with Mn: 3,500 g/mol and Tg=23°C (designated 3K in example 3), and poly(D,L-lactide-co-ε-caprolactone) with Mn: 5,600 g/mol and Tg=31°C (designated 5K in example 3) were tested in different gum base formulations.

The different gum base formulations were prepared in accordance with the below Table 3. The amounts in the compositions are given in percentage by weight

**TABLE 3**

| | Standard (101) | Resin substitute 1 (102) | Resin substitute 2 (103) | Standard (107) | Resin 20% substitute 2 (108) | Resin 35 % substitute 2 (109) |
|---|---|---|---|---|---|---|
| Elastomer | 18% | 18% | 18% | 18% | 18% | 18% |
| PVAc | 20% | - | - | 20% | - | - |
| Resin sub. 1 | - | 20% | - | - | - | - |
| Resin sub. 2 | - | - | 20% | - | 20% | 35% |
| Natural resin | 20% | 20% | 20% | 20% | 20% | 5% |
| Softner | 25% | 25% | 25% | 25% | 25% | 25% |
| Filler | 17% | 17% | 17% | 17% | 17% | 17% |

| | | | | | | |
|---|---|---|---|---|---|---|
| Resin sub. 1: poly(D,L-lactide-co-ε-caprolactone) with Mn 3500 g/mol and Tg=23°C Resin sub. 2: poly(D,L-lactide-co-ε-caprolactone) with Mn 5600 g/mol and Tg=31°C | | | | | | |

### EXAMPLE 5

### Comparison of synthesised resin substitutes with PVAc

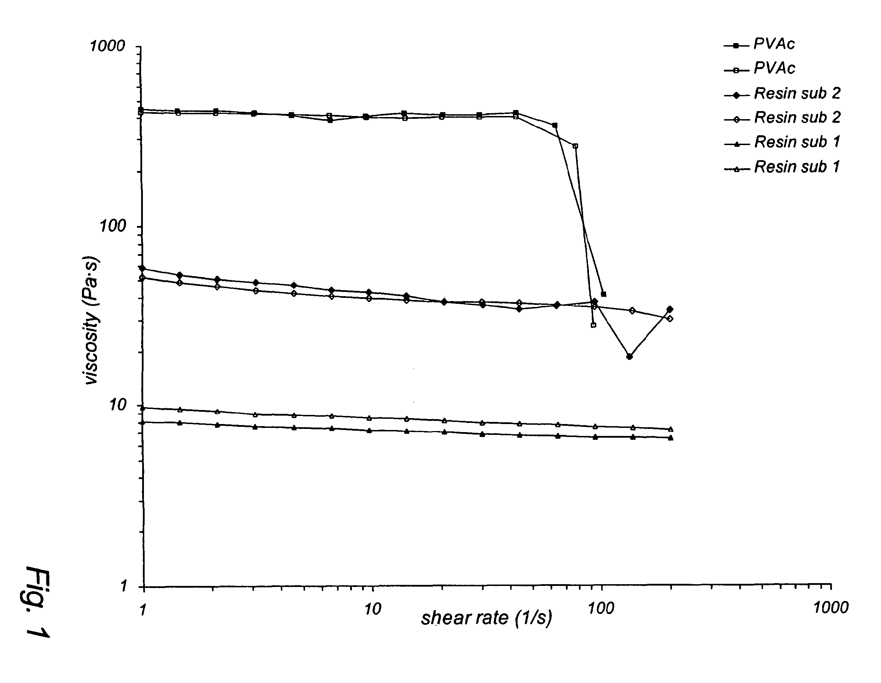

The two synthesised degradable resin substitutes from Example 3 were evaluated with respect to viscosity vs. shear rate and was compared with PVAc using a rheometer, type AR1000 from TA (Flow sweep at 100°C). The result of this evaluation can be seen from Fig. 1. It is clearly seen that Resin sub. 2 has a closer match to PVAc than Resin sub. 1 with respect to viscosity. Viscosity is an important parameter both with respect to the final texture properties of the gum and processing properties of gum base and chewing gum.

### EXAMPLE 6

### Evaluation of storage modulus, loss modulus and tan(delta) for gum bases prepared with synthesised resin substitutes

The two gum base samples prepared with the synthesised resin substitutes (samples 102 and 103 Example 4, Table 3) and the standard gum base prepared with PVAc (sample 101, Example 4, Table 3) were evaluated with respect to storage modulus (G') and loss modulus (G"). The rheological properties (frequency sweep at 70 °C) was determined using a rheometer, type AR1000 from TA Instruments. The oscillation measurement is performed at a stress within the linear viscoelastic region and a temperature of 70 °C with a parallel plate system (d=2,0 cm, hatched).

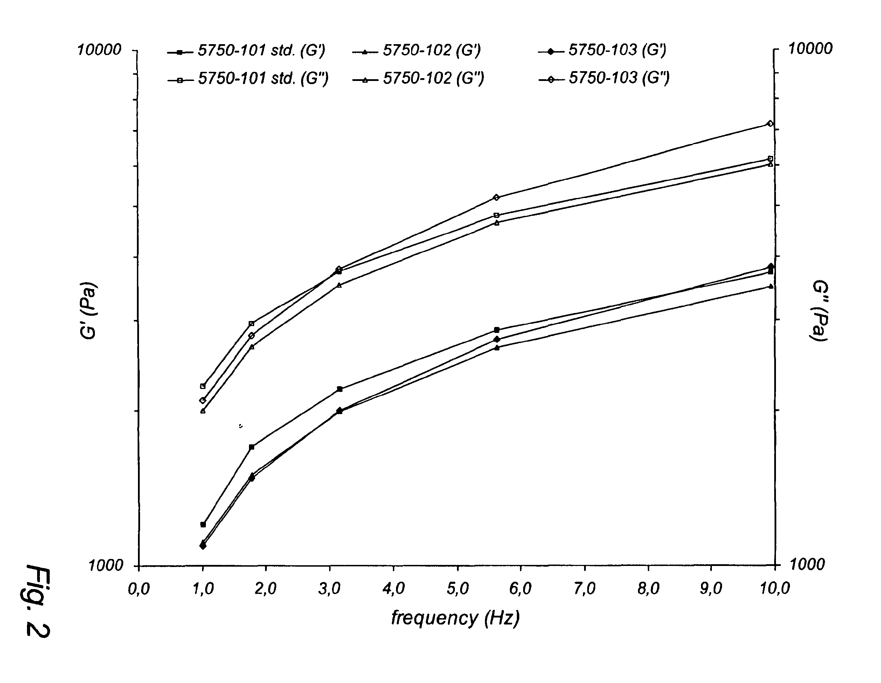

The results from these measurements are shown in Fig. 2. It is clearly seen from Fig. 2 that the gum base samples 102 and 103 containing the degradable resin substitutes Resin sub. 1 and Resin sub. 2, respectively, are very close to the standard gum base (sample 101) (conventional gum base) on these parameters. Thus, when measuring plasticity (loss modulus) and elasticity (storage modulus) it can be seen that the gum bases comprising the synthesised resin substitutes are similar to the standard gum base. Plasticity and elasticity are parameters that are essential for the texture in the final chewing gum. It can also be seen from Fig. 2 that the gum base sample containing Resin sub. 2 is closer to the standard with respect to these parameters.

### EXAMPLE 7

### Chewing profile

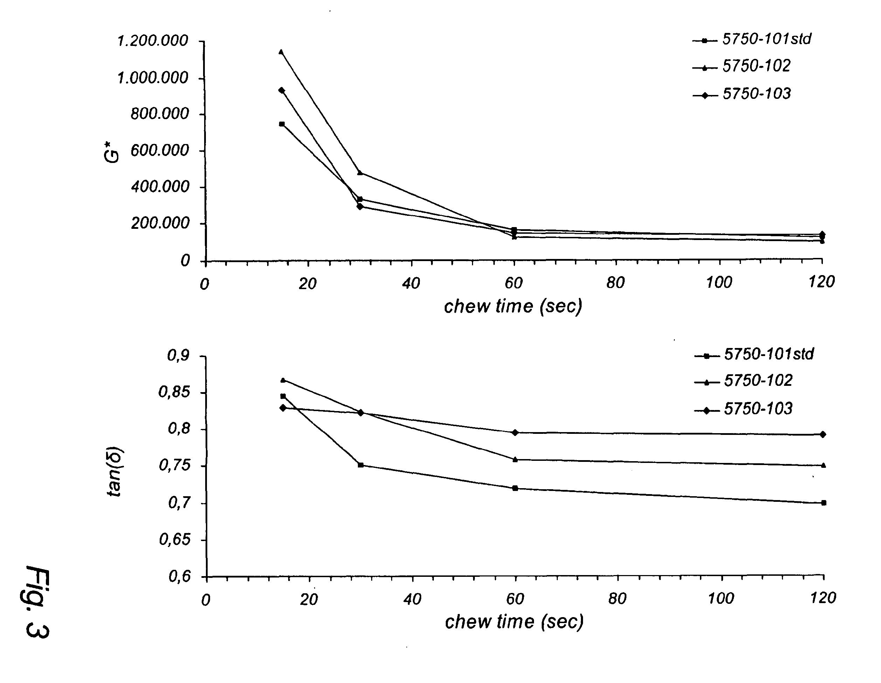

In order to test the chewing profile of the chewing gum samples containing the gum bases with synthesised degradable resin substitutes Resin sub. 1 and Resin sub. 2 (samples 102 and 103, respectively). The gum centres were chewed in a chewing machine (CF Jansson). The chewing frequency was set to 1 Hz, a pH buffer was used as saliva and the temperature was set at 37°C. The chewing time was set to 15 sec, 30 sec, 60 sec and 120 sec. After chewing, the chewed cud was measured on a rheometer, type AR1000 from TA Instruments in a frequency scan. The results from these measurements can be seen on Fig. 3 wherein the complex elasticity (G*) and tan(δ) versus chewing time is depicted illustrating the texture changes during chewing.

As it is clearly seen from the complex elasticity in Fig. 3, both samples containing synthesised degradable resin substitutes Resin sub. 1 (102) and Resin sub. 2 (103) are very close to the standard chewing gum (101) with a tendency that resin sub. 2 (103) is the one closest to the standard. These observations are confirming the rheological data obtained in the above Example 5.

### EXAMPLE 8

### Hardness

The hardness of the two chewing gum samples containing the synthesised degradable resin substitutes Resin sub. 1 and Resin sub. 2 (samples 102 and 103, respectively) was compared with a standard chewing gum preparation. The hardness of the test samples were tested by an compression load test using an Instron instrument with a 4 mm DIA CYLINDER STAINLESS at a speed of 25 mm/min. using a test distance of 3.5 mm into the chewing gum body.

The test result (N) of this experiment is shown in the below Table 4.

**TABLE 4**

| | Hardness (N) mean of 5 | S.D. (N) |
|---|---|---|
| Standard chewing gum (101) | 10.9 | 2.0 |
| Sample with resin substitute 1 (102) | 7.9 | 1.2 |
| Sample with resin substitute 2 (103) | 10.4 | 2.1 |

As can be seen from the above Table 4, the chewing gum samples containing resin substitutes 1 and 2 are very close to the standard chewing gum with respect to hardness. The gum base with resin sub. 2 is the one closest to standard gum base. These observations are confirming the rheological data obtained in Example 5 (viscosity) and Example 7 (complex elasticity).

### EXAMPLE 9

### Gum base replacement of synthetic resin PVAc and natural resin

An experiment was set up in order to test if the synthesised resin substitute resin sub. 2 would be suitable for substituting both the synthetic resin PVAc and the natural resin applied in gum base. Thus, a standard gum base containing 20% natural resin and 20% PVAc (sample 107, Table 4) was compared with a gum base containing 20% resin sub. 2 (substituting 20 % PVAc) and 20% natural resin (sample 108, Table 4) and a gum base containing 35% resin sub. 2 (substituting 20 % PVAc and 15% natural resin) and 5% natural resin, respectively. Thus, the amount of natural resin in sample 109 was reduced with 75% as compared to the standard gum base (sample 107). Accordingly, the following rheological parameters were measured using a rheometer, type AR1000 from TA Instruments: G* and tan delta vs. frequency, and viscosity vs. shear rate.

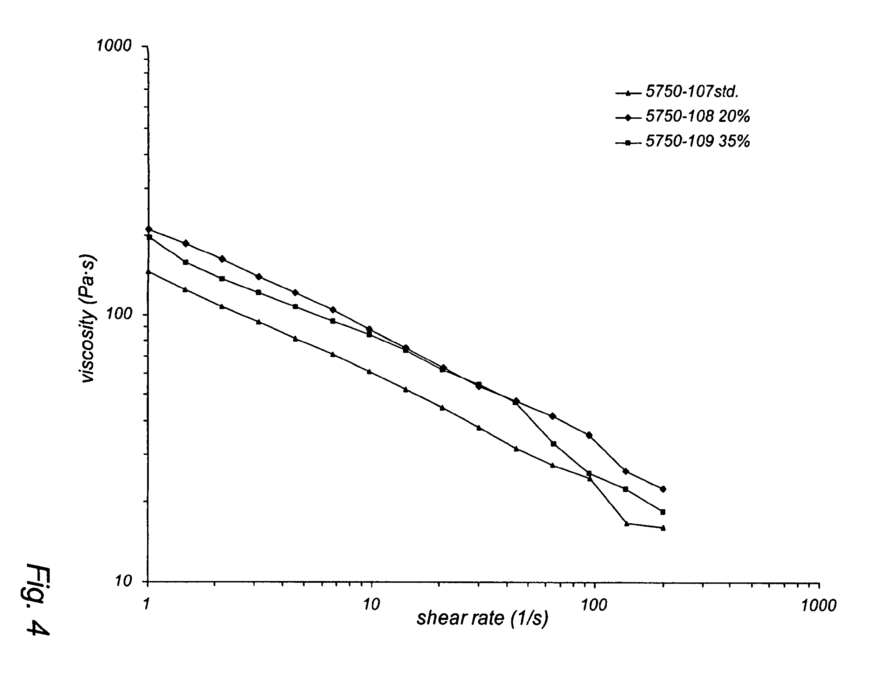

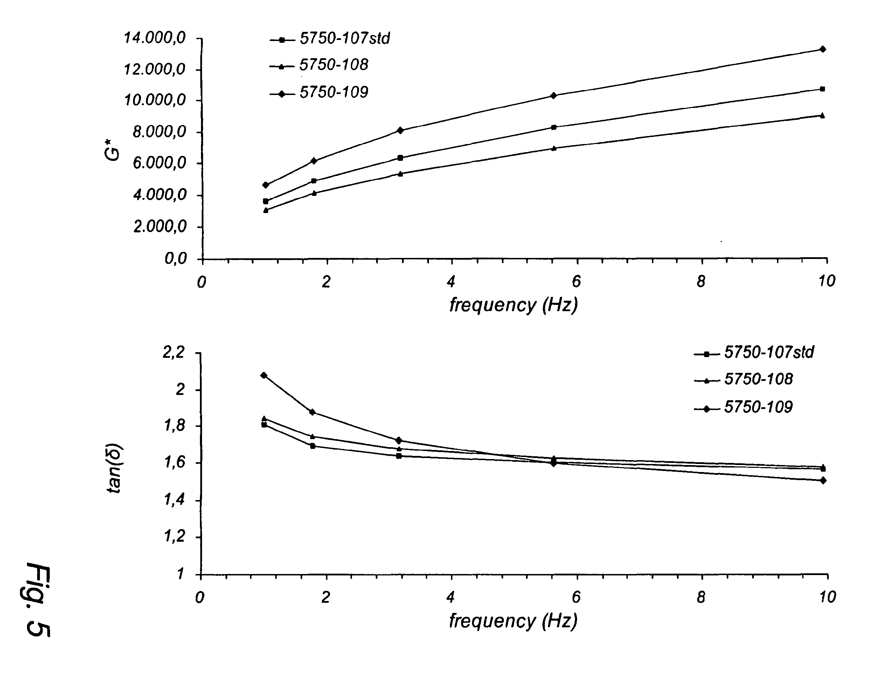

The results of these rheological measurements are shown on Fig. 4 and Fig. 5.

As can be seen from Fig. 4 the viscosity values of the gum base samples containing the 20 and 35 % resin substitutes (samples 108 and 109), are very close to the standard gum base (sample 107).

From Fig. 5, showing a frequency sweep of G* and tan (delta) as function of the frequency, it can be seen that the replacement of PVAc with resin sub. 2 (sample 108) results in a gum base which is similar to the standard gum base (sample 107). It is further seen from Fig. 5 that the replacement of both PVAc and 75% of the natural resin (sample 109) with resin sub. 2, results in a gum base which is close to the standard gum base (sample 107) with respect to the measured rheological properties, although it is a bit more compact (higher G*) and plastic (higher tan delta).

### EXAMPLE 10

### PVAc and natural resin replacement in a standard chewing gum formulation

The following experiment was conducted in order to test gum bases wherein PVAc and natural resin were replaced with resin sub. 2 in a standard peppermint chewing gum formulation.

Three chewing gum formulations were prepared with: i) a standard gum base with 20% PVAc and 20% natural resin (sample 107, Table 3), ii) a gum base containing 20% resin sub. 2 and 20% natural resin (sample 108, Table 3) and, iii) a gum base containing 35% resin sub. 2 and 5% natural resin (sample 109, Table 3).

The standard peppermint chewing gum formulation was prepared in accordance with the below Table 5.

**TABLE 5**

| | % wt. |
|---|---|
| Gumbase | 41.50 |
| Sorbitol powder | 40.50 |
| Maltitol syrup | 5.50 |
| Xylitol powder | 10.50 |
| Peppermint oil | 1.0 |
| Menthol | 0.30 |
| Menthol powder | 0.20 |
| Peppermint powder | 0.20 |
| Aspartame | 0.20 |
| Acesulfame | 0.10 |

The three chewing gum formulations prepared were evaluated with respect to G* and tan(δ) measured as chewing gum profiles.

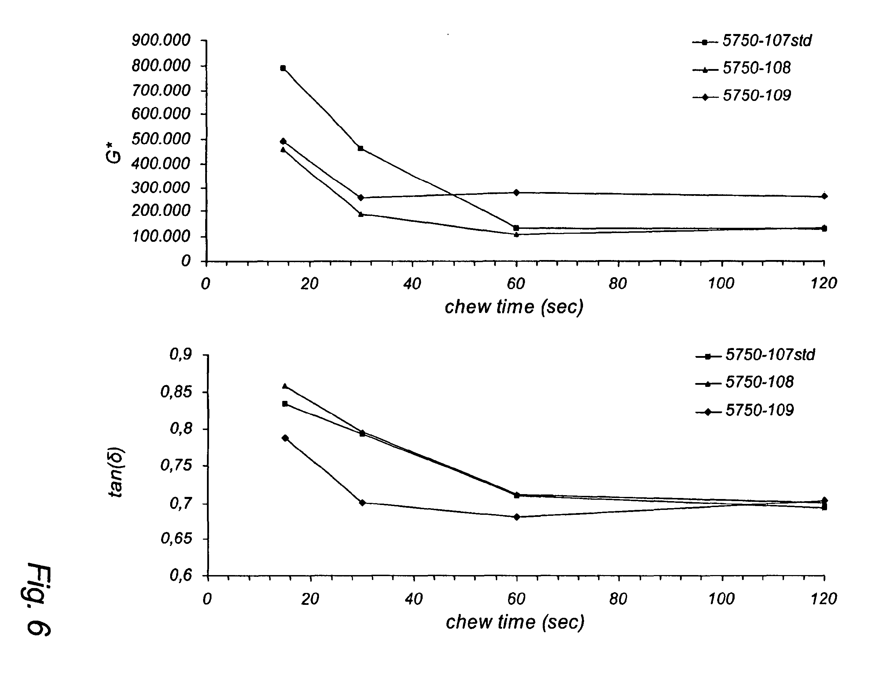

Fig. 6 shows the chewing gum profile of standard (107) and samples containing resin sub 2 in amounts of 20 % (108) and 35 % (109).

From Fig. 6 it can be seen that the two chewing gum formulations with gum base containing 20 % resin sub. 2 (108) and 35 % resin sub. 2 (109) are somewhat softer in the initial phase, i.e. until 45 sec after the onset of chewing. After 60 sec there are no differences between sample 107 and 108. Tan (δ) values on sample 107 and 108 are also similar. The above rheological results are confirming the fact that the resin substitute 2 has similar properties as compared to PVAc.

Additionally, the hardness of the three chewing gum compositions was evaluated by Instron hardness-method. The results of these measurements are shown in Table 6.

**TABLE 6**

| Chewing gum formulation | Hardness (N); mean of 5 | S.D. (N) |
|---|---|---|
| Standard gum base (107) | 20.4 | 0.7 |
| Gum base containing 20 % resin sub. 2 (108) | 20.4 | 0.7 |
| Gum base containing 35 % resin sub. 2 (109) | 27.1 | 0.6 |

As can be seen from Table 6, the results obtained from the hardness measurements are confirming the data obtained in the above Example 9, sample 108 has similar properties compared to standard (107). Thus, it can be seen that the chewing gum formulation based on gum base containing 35 % resin sub. 2 (109) is a bit harder in the initial chew compared to sample 107 and 108.

### EXAMPLE 11

### Sensory profile analyses of test chewing gum

The three chewing gum samples were tested by serving them to the sensory panellists in tasting booths made in accordance with ISO 8598 standards at room temperature in 40 ml tasteless plastic cups with randomised 3-figure codes. Test samples were evaluated after chewing for 0-1 minutes (initial phase), 2-3 minutes (intermediate phase) and 4-5 minutes (end phase), respectively. Between each sample tested, the panellist were allowed a brake of 3 minutes.

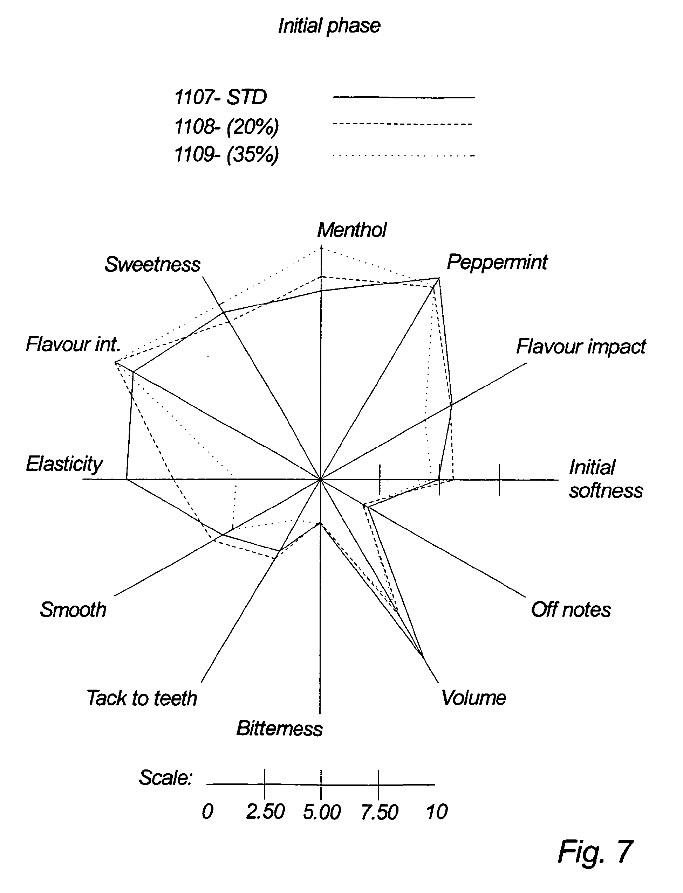

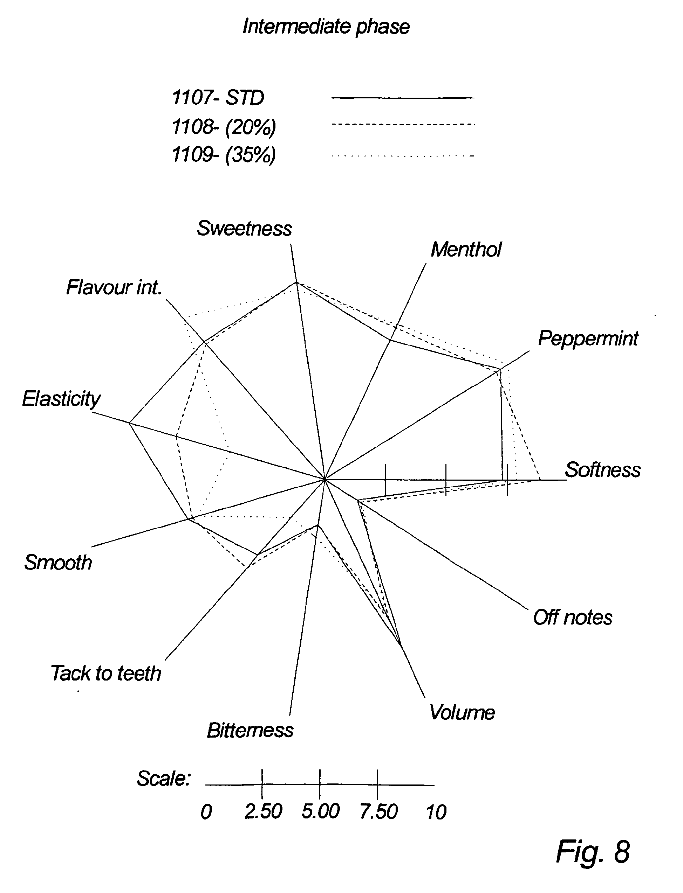

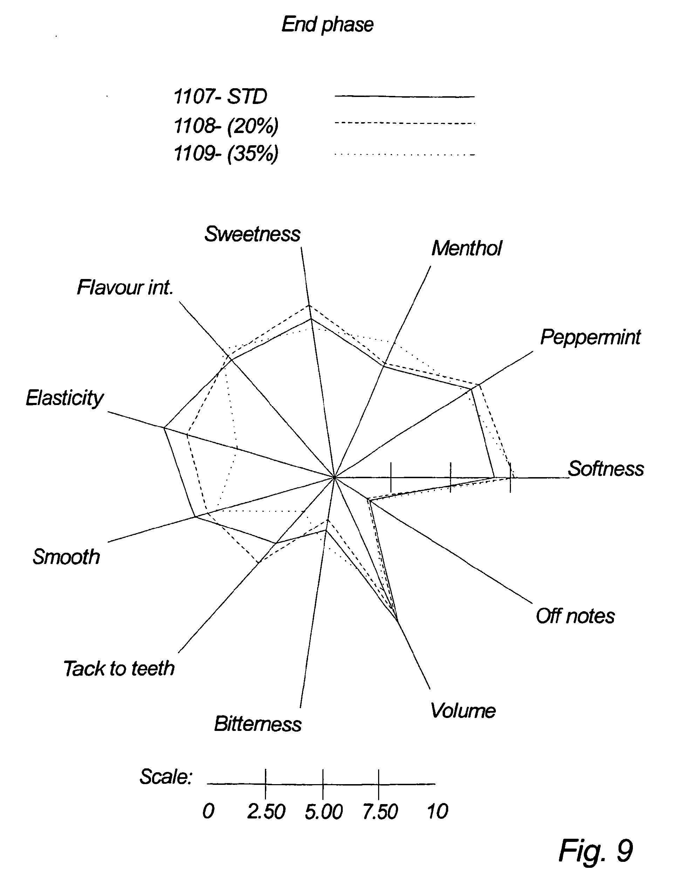

The following standard parameters were assessed: Peppermint flavour, Menthol, flavour intensity, tacking to teeth, bitterness, initial softness, volume, softness, sweetness, off-notes, smoothness and elasticity. For each of these parameters, the panellists were required to provide their assessments according to an arbitrary scale of 0-15. The data obtained were processed using a FIZZ computer program (French Bio System) and the results were transformed to sensory profile diagrams as shown in Figure 7-9.

The major differences between test chewing gums in all tree phases were the following:

The chewing gum containing 20 and 35 % resin sub 2. showed a higher softness compared with standard, except for the initial softness where 109 is the hardest formulation (confirming the hardness results in the above Example 10).

The chewing gum containing 20 and special 35 % resin sub 2. showed a lower tack to teeth compared with the standard formulation.

The elasticity and volume was found lower in the substituted resin samples compared to the standard, which might be explained by the softer and properly more plastic texture due to the decreased amount of natural resin.

### EXAMPLE 12

### Non-stick test

The stickiness of the gum bases presented in Table 3 was tested by applying an Instron instrument using a SMS Chen-Hoseny Dough Stickiness Rig. The chewing gum was chewed for 5 minutes in a chewing machine before measurements. The conditions set on the Instron were for the cross-head to come down at 0.5 mm/s to contact to chewing gum; the probe (stainless steel) then approached by 10 N. A hold time of 5 s to allow the stresses to relax. The rate of probe withdrawal was 10 mm/s. The stickiness force measured can be seen in Table 7.

**TABLE 7**

| | Stand ard (101) | Resin substitute 1 (102) | Resin substitute 2 (103) | Standard (107) | Resin 20 % substitute 2 (108) | Resin 35 % substitute 2 (109) |
|---|---|---|---|---|---|---|
| Result (N) mean | 4.32 | 4.19 | 2.33 | 7.06 | 3.81 | 1.66 |
| S.D. | 0.24 | 0.33 | 0.45 | 1.67 | 0.50 | 0.13 |

It is clearly seen from Table 7, that the gum bases wherein the PVAc is substituted by the resin substitutes 2 (samples 103) have a decreased tack as compared to the standard gum base (101) and sample 102.

Furthermore, an additional decrease in tack is observed when the PVAc and 75% of natural resins is replaced by resin sub. 2 (sample 109). Thus, for sample 109 the tack was 1,66 as compared to the standard gum base (107) which was 7.06.

The difference in stickiness between the two standard formulations (101 and 107) are cursed by difference in age of the two gums. (101,102,103 same age) (107,108, 109 same age).

### EXAMPLE 13

### Degradation test

The claimed chewing gum comprises at least one degradable polyester polymer.

In order to test the rate of degradation, the used polymer for substitution (poly(D,L-lactide-co-ε-caprolactone) was tested for stability.

The stability test were performed in a controlled climate room with following conditions:
Temperature: 30 °C
Relative humidity: 70 %

The rate of degradation is expressed in terms of molecular weight loss, measured by a GPC method.

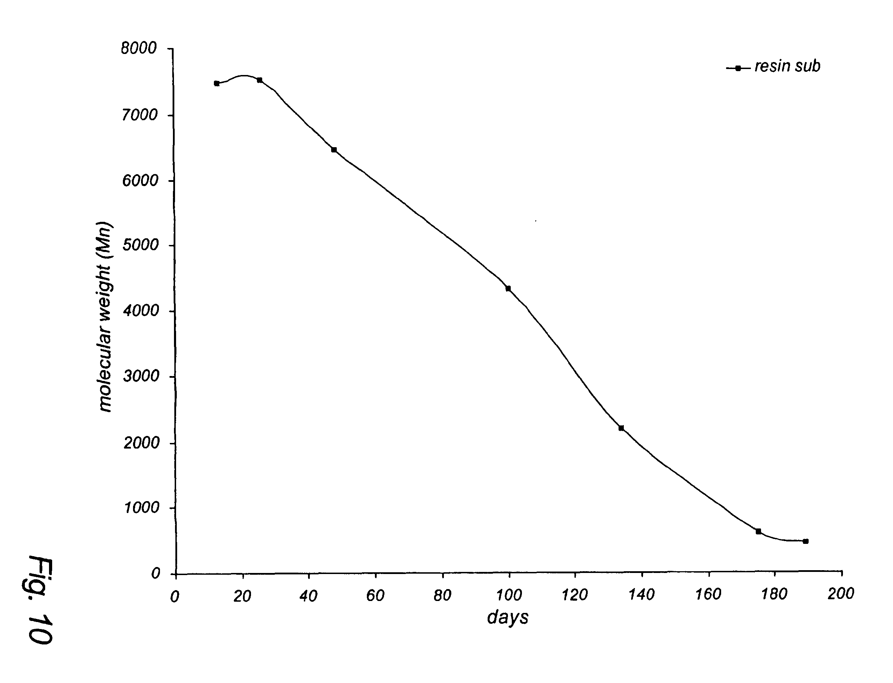

Figure 10 shows after 50 days of storage that the substitute has start to degrade. After 180 days the molecular weight of the substitute has decreased to around 10 % of the initial value.

## Claims

1. A gum base comprising elastomer and resin, wherein said resin comprises a chewing gum elastomer plasticizer comprising a polyester co-polymer obtainable by the polymerisation of cyclic esters and wherein the co-polymer has a glass transition temperature (Tg) in the range from 20 to 38°C.

2. A gum base according to claim 1 comprising a chewing gum elastomer plasticizer, wherein the polyester co-polymer has a glass transition temperature (Tg) in the range from 25 to 37°C, more preferred that the polyester co-polymer has a glass transition temperature (Tg) in the range from 28 to 35°C, even more preferred that the polyester co-polymer has a glass transition temperature (Tg) in the range from 30 to 35°C, and most preferred that the polyester co-polymer has a glass transition temperature (Tg) in the range from 31 to 34°C

3. A gum base according to claim 1 or 2 comprising a chewing gum elastomer plasticizer, wherein the co-polymer is obtainable by the polymerisation of a high Tg monomer and a low Tg monomer.

4. A gum base according to any of the claims 1 to 3 comprising a chewing gum elastomer plasticizer, wherein the high Tg monomer is selected form the group of monomers consisting of D,L-lactide, L-lactide and glycolide; and the low Tg monomer is selected from the group consisting of ε-caprolactone, δ-valerolactone, trimethylene carbonate (TMC) and dioxanone.

5. A gum base according to any of the claims 1 to 4 comprising a chewing gum elastomer plasticizer, comprising a co-polymer consisting of D,L-lactide and ε-caprolactone.

6. A gum base according to any of the claims 1 to 5 comprising a chewing gum elastomer plasticizer, wherein the co-monomer ratio between D,L-lactide and ε-caprolactone in the co-polymer is in the range of 80:20 to 99:1 (mol:mol).

7. A gum base according to any of the claims 1 to 6 comprising a chewing gum elastomer plasticizer, wherein the co-monomer ratio between D,L-lactide and ε-caprolactone in the co-polymer is in the range of 92:8 to 94:6 (mol:mol).

8. A gum base according to any of the claims 1 to 7 comprising a chewing gum elastomer plasticizer, wherein the molecular weight ratio between D,L-lactide and ε-caprolactone in the co-polymer is 93:7(mol:mol).

9. A gum base according to any of the claims 1 to 8 comprising a chewing gum elastomer plasticizer, wherein the molecular weight of said co-polymer is in the range of 1.500 - 9.000 g/mol.

10. A gum base according to any of the claims 1 to 9 comprising a chewing gum elastomer plasticizer, wherein the molecular weight of said co-polymer is in the range of 3.000 - 7.000 g/mol.

11. A gum base according to any of the claims 1 to 10 comprising a chewing gum elastomer plasticizer, wherein the molecular weight of said co-polymer is 3.500 g/mol.

12. A gum base according to any of the claims 1 to 10 comprising a chewing gum elastomer plasticizer, wherein the molecular weight of said co-polymer is 5.000 g/mol.

13. A gum base according to any of the claims 1 to 12 comprising a chewing gum elastomer plasticizer, wherein the glass transition temperature (Tg) of said copolymer is in the range of 21-25°C.

14. A gum base according to any of the claims 1 to 12 comprising a chewing gum elastomer plasticizer, wherein the glass transition temperature (Tg) of said copolymer is in the range of 30-35°C.

15. A gum base according to any of the claims 1 to 14 comprising a chewing gum elastomer plasticizer consisting of D,L-lactide and ε-caprolactone.

16. A chewing gum comprising elastomer and resin, wherein said resin comprises a chewing gum elastomer plasticizer polyester co-polymer obtainable by the polymerisation of cyclic esters and wherein the co-polymer has a glass transition temperature (Tg) in the range from 20 to 38°C

17. A chewing gum according to claim 16, wherein the polyester co-polymer has a glass transition temperature (Tg) in the range from 25 to 37°C, more preferred that the polyester co-polymer has a glass transition temperature (Tg) in the range from 28 to 35°C, even more preferred that the polyester co-polymer has a glass transition temperature (Tg) in the range from 30 to 35°C, and most preferred that the polyester co-polymer has a glass transition temperature (Tg) in the range from 31 to 34°C

18. A chewing gum according to claim 16 or 17, wherein the co-polymer is obtainable by the polymerisation of a high Tg monomer and a low Tg monomer.

19. A chewing gum according any of claims 16 to 17, wherein the high Tg monomer is selected form the group of monomers consisting of D,L-lactide, L-lactide and glycolide; and the low Tg monomer is selected from the group consisting of ε-caprolactone, δ-valerolactone, trimethylene carbonate (TMC) and dioxanone.

20. Method of manufacturing a chewing gum, whereby at least one resin has been substituted by at least one biodegradable resin having rheologically properties substantially matching at least one conventional non-biodegradable resin suitable for chewing gum, whereby the at least one biodegradable resin comprises a biodegradable elastomer plasticizer polymer according to any of the claims 1-15.

## Patentansprüche

1. Gummigrundlage, umfassend Elastomer und Harz, wobei das Harz einen Kaugummi-Elastomer-Weichmacher, umfassend ein Polyester-Copolymer, das durch die Polymerisation von cyclischen Estern erhalten werden kann, umfasst und wobei das Copolymer eine Glasübergangstemperatur (Tg) im Bereich von 20 bis 38°C aufweist.

2. Gummigrundlage nach Anspruch 1, umfassend einen Kaugummi-Elastomer-Weichmacher, wobei das Polyester-Copolymer eine Glasübergangstemperatur (Tg) im Bereich von 25 bis 37°C aufweist, mehr bevorzugt, dass das Polyester-Copolymer eine Glasübergangstemperatur (Tg) im Bereich von 28 bis 35°C aufweist, sogar noch mehr bevorzugt, dass das Polyester-Copolymer eine Glasübergangstemperatur (Tg) im Bereich von 30 bis 35°C aufweist, und am meisten bevorzugt, dass das Polyester-Copolymer eine Glasübergangstemperatur (Tg) im Bereich von 31 bis 34°C aufweist.

3. Gummigrundlage nach Anspruch 1 oder 2, umfassend einen Kaugummi-Elastomer-Weichmacher, wobei das Copolymer durch die Polymerisation eines Monomers mit hoher Tg und eines Monomers mit niedriger Tg erhalten werden kann.

4. Gummigrundlage nach einem der Ansprüche 1 bis 3, umfassend einen Kaugummi-Elastomer-Weichmacher, wobei das Monomer mit hoher Tg aus der Gruppe von Monomeren bestehend aus D,L-Lactid, L-Lactid und Glycolid ausgewählt ist und das Monomer mit niedriger Tg aus der Gruppe bestehend aus ε-Caprolacton, δ-Valerolacton, Trimethylencarbonat (TMC) und Dioxanon ausgewählt ist.

5. Gummigrundlage nach einem der Ansprüche 1 bis 4, umfassend einen Kaugummi-Elastomer-Weichmacher, welcher ein aus D,L-Lactid und ε-Caprolacton bestehendes Copolymer umfasst.

6. Gummigrundlage nach einem der Ansprüche 1 bis 5, umfassend einen Kaugummi-Elastomer-Weichmacher, wobei das Co-Monomer-Verhältnis zwischen D,L-Lactid und ε-Caprolacton in dem Copolymer in dem Bereich von 80:20 bis 99:1 (Mol:Mol) liegt.

7. Gummigrundlage nach einem der Ansprüche 1 bis 6, umfassend einen Kaugummi-Elastomer-Weichmacher, wobei das Co-Monomer-Verhältnis zwischen D,L-Lactid und ε-Caprolacton in dem Copolymer in dem Bereich von 92:8 bis 94:6 (Mol:Mol) liegt.

8. Gummigrundlage nach einem der Ansprüche 1 bis 7, umfassend einen Kaugummi-Elastomer-Weichmacher, wobei das Molekulargewichtsverhältnis zwischen D,L-Lactid und ε-Caprolacton in dem Copolymer 93:7 (Mol:Mol) beträgt.

9. Gummigrundlage nach einem der Ansprüche 1 bis 8, umfassend einen Kaugummi-Elastomer-Weichmacher, wobei das Molekulargewicht des Copolymers im Bereich von 1.500 - 9.000 g/mol liegt.

10. Gummigrundlage nach einem der Ansprüche 1 bis 9, umfassend einen Kaugummi-Elastomer-Weichmacher, wobei das Molekulargewicht des Copolymers im Bereich von 3.000 - 7.000 g/mol liegt.

11. Gummigrundlage nach einem der Ansprüche 1 bis 10, umfassend einen Kaugummi-Elastomer-Weichmacher, wobei das Molekulargewicht des Copolymers 3.500 g/mol beträgt.

12. Gummigrundlage nach einem der Ansprüche 1 bis 10, umfassend einen Kaugummi-Elastomer-Weichmacher, wobei das Molekulargewicht des Copolymers 5.000 g/mol beträgt.

13. Gummigrundlage nach einem der Ansprüche 1 bis 12, umfassend einen Kaugummi-Elastomer-Weichmacher, wobei die Glasübergangstemperatur (Tg) des Copolymers im Bereich von 21-25°C liegt.

14. Gummigrundlage nach einem der Ansprüche 1 bis 12, umfassend einen Kaugummi-Elastomer-Weichmacher, wobei die Glasübergangstemperatur (Tg) des Copolymers im Bereich von 30-35°C liegt.

15. Gummigrundlage nach einem der Ansprüche 1 bis 14, umfassend einen Kaugummi-Elastomer-Weichmacher bestehend aus D,L-Lactid und ε-Caprolacton.

16. Kaugummi, umfassend Elastomer und Harz, wobei das Harz ein Kaugummi-Elastomer-Weichmacher-Polyester-Copolymer, das durch die Polymerisation von cyclischen Estern erhalten werden kann, umfasst und wobei das Copolymer eine Glasübergangstemperatur (Tg) im Bereich von 20 bis 38°C aufweist.

17. Kaugummi nach Anspruch 16, wobei das Polyester-Copolymer eine Glasübergangstemperatur (Tg) im Bereich von 25 bis 37°C aufweist, mehr bevorzugt, dass das Polyester-Copolymer eine Glasübergangstemperatur (Tg) im Bereich von 28 bis 35°C aufweist, sogar noch mehr bevorzugt, dass das Polyester-Copolymer eine Glasübergangstemperatur (Tg) im Bereich von 30 bis 35°C aufweist, und am meisten bevorzugt, dass das Polyester-Copolymer eine Glasübergangstemperatur (Tg) im Bereich von 31 bis 34°C aufweist.

18. Kaugummi nach Anspruch 16 oder 17, wobei das Copolymer durch die Polymerisation eines Monomers mit hoher Tg und eines Monomers mit niedriger Tg erhalten werden kann.

19. Kaugummi nach einem der Ansprüche 16 bis 17, wobei das Monomer mit hoher Tg aus der Gruppe von Monomeren bestehend aus D,L-Lactid, L-Lactid und Glycolid ausgewählt ist und das Monomer mit niedriger Tg aus der Gruppe bestehend aus ε-Caprolacton, δ-Valerolacton, Trimethylencarbonat (TMC) und Dioxanon ausgewählt ist.

20. Verfahren zum Herstellen eines Kaugummis, wobei mindestens ein Harz durch mindestens ein biologisch abbaubares Harz mit rheologischen Eigenschaften, die im Wesentlichen mit mindestens einem herkömmlichen, nicht biologisch abbaubaren Harz, das für Kaugummi geeignet ist, übereinstimmen, ersetzt worden ist, wobei das mindestens eine biologisch abbaubare Harz ein biologisch abbaubares Elastomer-Weichmacher-Polymer nach einem der Ansprüche 1-15 umfasst.

## Revendications

1. Base de gomme comprenant un élastomère et une résine, dans laquelle ladite résine comprend un plastifiant élastomère de gomme à mâcher comprenant un copolymère polyester pouvant être obtenu par la polymérisation d'esters cycliques et dans laquelle le copolymère a une température de transition vitreuse (Tg) dans la plage de 20 à 38° C.

2. Base de gomme selon la revendication 1, comprenant un plastifiant élastomère de gomme à mâcher, dans laquelle le copolymère polyester a une température de transition vitreuse (Tg) dans la plage de 25 à 37° C, de manière davantage préférée, le copolymère polyester a une température de transition vitreuse (Tg) dans la plage de 28 à 35° C, de manière encore davantage préférée, le copolymère polyester a une température de transition vitreuse (Tg) dans la plage de 30 à 35° C et de manière préférée entre toutes, le copolymère polyester a une température de transition vitreuse (Tg) dans la plage de 31 à 34° C.

3. Base de gomme selon la revendication 1 ou 2, comprenant un plastifiant élastomère de gomme à mâcher, dans laquelle le copolymère peut être obtenu par la polymérisation d'un monomère à Tg élevé et d'un monomère à Tg basse.

4. Base de gomme selon l'une quelconque des revendications 1 à 3, comprenant un plastifiant élastomère de gomme à mâcher, dans laquelle le monomère à Tg élevée est choisi dans le groupe de monomères consistant en le D,L-lactide, le L-lactide et le glycolide ; et le monomère à Tg basse est choisi dans le groupe consistant en la ε-caprolactone, la δ-valérolactone, le carbonate de triméthylène (TMC) et la dioxanone.

5. Base de gomme selon l'une quelconque des revendications 1 à 4, comprenant un plastifiant élastomère de gomme à mâcher, comprenant un copolymère consistant en le D,L-lactide et la ε-caprolactone.

6. Base de gomme selon l'une quelconque des revendications 1 à 5, comprenant un plastifiant élastomère de gomme à mâcher, dans laquelle le rapport de comonomère entre le D,L-lactide et la ε-caprolactone dans le copolymère est dans la plage de 80:20 à 99:1 (mole:mole).

7. Base de gomme selon l'une quelconque des revendications 1 à 6, comprenant un plastifiant élastomère de gomme à mâcher, dans laquelle le rapport de comonomère entre le D,L-lactide et la ε-caprolactone dans le copolymère est dans la plage de 92:8 à 94:6 (mole/mole).

8. Base de gomme selon l'une quelconque des revendications 1 à 7, comprenant un plastifiant élastomère de gomme à mâcher, dans laquelle le rapport de poids moléculaire entre le D,L-lactide et la ε-caprolactone dans le copolymère est de 93:7 (mole/mole).

9. Base de gomme selon l'une quelconque des revendications 1 à 8, comprenant un plastifiant élastomère de gomme à mâcher, dans laquelle le poids moléculaire dudit copolymère est dans la plage de 1,500 à 9,000 g/mole.

10. Base de gomme selon l'une quelconque des revendications 1 à 9, comprenant un plastifiant élastomère de gomme à mâcher, dans laquelle le poids moléculaire dudit copolymère est dans la plage de 3,000 à 7,000 g/mole.

11. Base de gomme selon l'une quelconque des revendications 1 à 10, comprenant un plastifiant élastomère de gomme à mâcher, dans laquelle le poids moléculaire dudit copolymère est de 3,500 g/mole.

12. Base de gomme selon l'une quelconque des revendications 1 à 10, comprenant un plastifiant élastomère de gomme à mâcher, dans laquelle le poids moléculaire dudit copolymère est de 5,000 g/mole.

13. Base de gomme selon l'une quelconque des revendications 1 à 12, comprenant un plastifiant élastomère de gomme à mâcher, dans laquelle la température de transition vitreuse (Tg) dudit copolymère est dans la plage de 21 à 25° C.

14. Base de gomme selon l'une quelconque des revendications 1 à 12, comprenant un plastifiant élastomère de gomme à mâcher, dans laquelle la température de transition vitreuse (Tg) dudit copolymère est dans la plage de 30 à 35° C.

15. Base de gomme selon l'une quelconque des revendications 1 à 14, comprenant un plastifiant élastomère de gomme à mâcher consistant en le D,L-lactide et la ε-caprolactone.

16. Gomme à mâcher comprenant un élastomère et une résine, dans laquelle ladite résine comprend un copolymère polyester plastifiant de gomme à mâcher pouvant être obtenu par la polymérisation d'esters cycliques et dans laquelle le copolymère a une température de transition vitreuse (Tg) dans la plage de 20 à 38° C.

17. Gomme à mâcher selon la revendication 16, dans laquelle le copolymère polyester a une température de transition vitreuse (Tg) dans la plage de 25 à 37° C, de manière davantage préférée le copolymère polyester a une température de transition vitreuse (Tg) dans la plage de 28 à 35° C, de manière encore davantage préférée le copolymère polyester a une température de transition vitreuse (Tg) dans la plage de 30 à 35° C et de manière préférée entre toutes le copolymère polyester a une température de transition vitreuse (Tg) dans la plage de 31 à 34° C.

18. Gomme à mâcher selon la revendication 16 ou 17, dans laquelle le copolymère peut être obtenu par la polymérisation d'un monomère à Tg élevé et d'un monomère à Tg basse.

19. Gomme à mâcher selon l'une quelconque des revendications 16 à 17, dans laquelle le monomère à Tg élevée est choisi dans le groupe de monomères consistant en le D,L-lactide, le L-lactide et le glycolide ; et le monomère à Tg basse est choisi dans le groupe consistant en la ε-caprolactone, la δ-valérolactone, le carbonate de triméthylène (TMC) et la dioxanone.

20. Procédé de fabrication d'une gomme à mâcher, par lequel au moins une résine a été substituée par au moins une résine biodégradable ayant des propriétés rhéologiques correspondant substantiellement à celles d'au moins une résine non biodégradable classique appropriée pour une gomme à mâcher, ladite résine biodégradable comprenant un polymère plastifiant élastomère biodégradable selon l'une quelconque des revendications 1 à 15.
